# EUROPÄISCHE PATENTSCHRIFT

(11) **EP 0 810 919 B1**
(45) Veröffentlichungstag und Bekanntmachung des Hinweises auf die Patenterteilung: **16.12.1998**
(21) Anmeldenummer: 96902912.3
(22) Anmeldetag: 23.01.1996
(51) Int. Cl.: B29C 49/42, B29C 49/06

(54) **SPRITZGUSSBLASFORMMASCHINE**
INJECTION MOULDING MACHINE
MACHINE DE MOULAGE PAR INJECTION

(30) Priorität: 24.02.1995 DE 19506599
(43) Veröffentlichungstag der Anmeldung: 10.12.1997
(73) Patentinhaber: SYSTEC ENGINEERING KNAUER GMBH & CO. KG, D-72574 Bad Urach (DE)
(72) Erfinder: DÖBLER, Walter, D-72574 Bad Urach (DE)
(74) Vertreter: Grünecker, Kinkeldey, Stockmair & Schwanhäusser Anwaltssozietät
(86) Internationale Anmeldenummer: EP9600271
(87) Internationale Veröffentlichungsnummer: WO9626065

(56) Entgegenhaltungen:
- EP-A- 0 180 524
- EP-A- 0 411 592
- DE-C-19 506 599
- FR-A- 1 394 797
- GB-A- 2 078 601
- US-A- 3 944 643

## Beschreibung

Die vorliegende Erfindung bezieht sich auf Spritzgußmaschinen mit einem mindestens eine Matrize und Patrize umfassenden Spritzgußwerkzeug gemäß dem Oberbegriff des Anspruchs 1.

Spritzgußmaschinen sind selbstverständlich im Stand der Technik weitreichend bekannt und finden vielfach Anwendung. Nun werden solche Spritzgußmaschinen auch oft dazu verwendet, Vorformlinge herzustellen, die einem nachfolgenden Blasvorgang zugeführt werden. So ist es z.B. bei der Herstellung von großvolumigen Getränkeflaschen aus Kunststoff bekannt, einen Vorformling in einer Spritzgußmaschine herzustellen und den Vorformling abkühlen zu lassen, so daß dieser dann an Ort und Stelle im Getränkebetrieb nach entsprechender Wärmevorbehandlung in die Endform gebracht werden kann. Es gibt in diesem Zusammenhang aber auch Lösungen, bei denen der Vorformling aus der Spritzgußmaschine entnommen und einer Fördereinrichtung zugeführt wird, die mit dem Vorformling zahlreiche Zwischenbearbeitungsschritte, wie z.B. Kristallisierung des Verschlußgewindebereichs usw. durchläuft. Abschließend erfolgt dann vor dem eigentlichen Blasvorgang noch ein Wärmebehandlungsschritt. Diese im Stand der Technik bekannten Verfahren haben den großen Nachteil, daß sie speziell auf das Herstellen von Getränkeflaschen abgestimmt sind und sich diese Vorrichtung zum Herstellen anderer Spritzblasformteile nicht so recht durchsetzen können.

Es ist daher die Aufgabe der vorliegenden Erfindung eine Spritzgußmaschine bereitzustellen, deren Einsatzmöglichkeit erweitert ist.

Diese Aufgabe wird gemäß Anspruch 1 gelöst.

Die Druckschrift EP-A-180524 und die Druckschrift EP-A-411592 zeigen Konstruktionen mit individueller Steuerung der jeweiligen Werkzeuge. Die gegenwärtig beanspruchte feste Verbindung wird somit nicht offenbart.

Die Druckschrift US-A-3944643 zeigt eine Maschine, in der die Blasformwerkzeugteile (Bezugszeichen 14 und 15) individuell bewegt werden. Die gegenwärtig beanspruchte feste Verbindung wird somit nicht offenbart.

Die GB-A-2078601 (D1) beschreibt nicht die gegenwärtig beanspruchte feste Verbindung der jeweiligen beweglichen Werkzeugteile.

Ebenfalls hat man sich in der DE-PS 3 811 465 mit dem Thema der Integration eines Blasformwerkzeuges in einer Spritzgußmaschine schon beschäftigt. Bei dieser bekannten Vorrichtung sind jedoch das Spritzgußwerkzeug und Blasformwerkzeug in Reihe hintereinander geschaltet und weisen eine gemeinsame, drehbare Patrize auf, wobei die im Spritzgußwerkzeug erzeugten Vorformlinge auf den Formkernen der Patrize verbleiben und durch Drehen der gesamten Patrize in die Blasformstation überführt werden. Die Vorrichtung hat den Vorteil, daß durch die kurzen Wege die hier bereitgestellt werden ein Abkühlen des Vorformlings weitgehenst verhindert wird. Der Nachteil dieser Vorrichtung gegenüber der vorliegenden Erfindung besteht aber darin, daß die doppelte Anzahl von Kernen auf einer aufwendig ausgestalteten Patrize erforderlich sind. Ein weiterer Vorteil der vorliegenden Erfindung besteht darin, daß durch den hier zur Verfügung gestellten Übergabegreifer lediglich geringe Massen gegenüber einer drehbaren Patrize zu bewegen sind, wodurch sich größere Geschwindigkeiten fahren lassen und Energie eingespart werden kann. Des weiteren ist auch ein Formatwechsel bei der erfindungsgemäßen Vorrichtung mit relativ geringem Aufwand möglich. Durch die Einfachhaltung des Spritzgußwerkzeuges und des Blasformwerkzeuges werden geringe Werkzeug-Bauhöhen erreicht, wobei auch eine Etagenbauweise durchaus denkbar ist. Wichtig ist hierzu bei der vorliegenden Erfindung, daß das Spritzgußwerkzeug und das Blasformwerkzeug im wesentlichen unmittelbar nebeneinander angeordnet sind, so daß geringste Verfahrwege für den Vorformling durch den Übergabegreifer notwendig sind und die Restwärme vom Spritzgußvorgang für den Blasformvorgang ausgenutzt werden kann.

Um insbesondere schwierig zu bearbeitende Kunststoffe, wie z.B. PET, verarbeiten zu können, kann dem Blasformwerkzeug mindestens ein Reckstempel zugeordnet sein. Die Reckstempel können dann entsprechend einem Vorreckprogramm jeweils in die zugeordneten Blasformen eingefahren werden. Beim oben beschriebenen Stand der Technik bestand der Nachteil, daß derartige Reckstempel im Formkern integriert sein mußten und somit nur ein begrenzter Platz für diesen zur Verfügung stand. Der Reckstempel gemäß der vorliegenden Erfindung kann jegliche notwendige Größe aufweisen und entsprechend optimiert sein. Darüber hinaus können durch das getrennte Anordern von Reckstempeln und Formkernen in der Patrize problemlos mehrere Kühl- oder Heizkreisläufe auch in den Formkernen, angeordnet sein, da kein Platz mehr für einen Vorreckstempel an dieser Stelle benötigt wird.

Vorteilhafterweise kann die Bewegung des Übergabegreifers durch die Öffnungs- bzw. Schließbewegung des Spritzgußwerkzeugs und/oder Blasformwerkzeug zwangsgesteuert sein. Die Zwangssteuerung führt dazu, daß kein separater Antrieb für die Greiferbewegung vorgesehen sein muß, der dann mit den Öffnungs- und Schließbewegungen der Werkzeuge synchronisiert wird.

In einer bevorzugten Ausführungsform weist der Übergabegreifer einen Schwenkarm auf, der um eine bezüglich einer Werkzeughälfte des Spritzguß- und/oder Blasformwerkzeugs ortsfest angeordnete Schwenkachse schwenkbar ist. Unter dem Begriff Werkzeughälfte ist jeweils ein Hauptbereich des jeweiligen Werkzeuges zu verstehen. Die ortsfeste Anordnung bezüglich einer solchen Werkzeughälfte des Übergabegreifers gewährleistet allzeit eine positionsgenaue Anordnung, wobei die Schwenkachse durch diese Anordnung derart optimal anbringbar ist, daß ein möglichst kurzer Schwenkarm zur Bedienung des Spritzgußwerkzeugs und Blasformwerkzeugs bereitgestellt werden kann.

In einer besonderen Ausführungsform der vorliegenden Erfindung sind die Öffnungsrichtungen des Spritzgußwerkzeugs und des Blasformwerkzeugs quer zueinander, bevorzugt ca. 90°, ausgerichtet. Der Übergabegreifer muß bei dieser Ausbildung einen Schwenkbereich von bis zu 180° abdecken. Diese Anordnung eignet sich insbesondere für Senkrechtspritzgußmaschinen, da in diesem Falle das aus der Blasform zu entnehmende fertige Werkstück bereits richtig herum positioniert ist und z.B. automatisch auf ein Förderband fallen kann. Eine weitere Handhabungsaktion zum Wenden des Werkstückes ist nicht erforderlich.

Die Erfindung gemäß Anspruch 1 sieht vor, daß die Öffnungsrichtungen des Spritzgußwerkzeugs und des Blasformwerkzeugs parallel zueinander angeordnet sind. Eine solche Anordnung bietet sich z.B. an, wenn die Entnahme nach unten erfolgt, da dann die nach dem Blasformvorgang fertigen Werkstücke wieder in einer besonders günstigen Abnahmeposition liegen. Selbstverständlich kann eine solche Ausführungsform auch für die seitliche oder obere Anordnung des Blasformwerkzeugs Verwendung finden. Die erfindungsgemäße Maschine ist so gestaltet, daß zumindest die sich bewegenden Teile (z.B. Matrize bzw. Patrize oder linke bzw. rechte Formhälfte) des Spritzgußwerkzeugs und des Blasformwerkzeugs zum Ausführen einer gemeinsamen Öffnungs- und Schließbewegung miteinander fest verbunden sind. Diese Ausgestaltung bietet den enormen Vorteil, daß für die Schließ- und Öffnungsbewegung beider Werkzeuge lediglich ein einziger Antrieb erforderlich ist, wobei darüber hinaus keine besondere Zwangskopplung zwischen den Formteilen realisiert werden muß. Die Werkzeuge öffnen und schließen einfach parallel zueinander.

Um weiterhin Platz einzusparen kann der Reckstempel in dem Spritzgußwerkzeug quer zu dessen Öffnungsrichtung integriert sein. Das Blasformwerkzeug läßt sich dadurch besonders nahe an das Spritzgußwerkzeug heranführen, da die Reckstempel, z.B. in Formtaschen, in dem Spritzgußwerkzeug angeordnet sind.

Damit der Greifer nicht in eine zwischen dem Spritzgußwerkzeug und dem Blasformwerkzeug befindliche Nichtgebrauchsstellung während der Bearbeitungsvorgänge gefahren werden muß, kann diese als Formbestandteil der Matrize oder Patrize ausgebildet sein, und beim Spritzgußvorgang in dem Spritzgußwerkzeug verweilen und einen Teil der Form bilden. Es besteht aber auch die Möglichkeit den Übergabegreifer als Formbestandteil der Blasform auszubilden, so daß dieser beim Blasvorgang in dem Blasformwerkzeug verweilt und einen Teil der Blasform bildet. Der Greifer kann somit den entsprechenden Erfordernissen angepaßt sein, was z.B. bei der Herstellung von Produkten mit einem Gewinde im Kopfbereich von großer Bedeutung ist. Bei der Integration des Greifers in das Spritzgußwerkzeug stellt sich auch nicht das Problem, daß die Greiffunktion fehlerhaft ausgeführt wird, da der Kunststoff bereichsweise an den Greifer angespritzt wird, und somit maßgenau an diesem anliegt.

Um insbesondere längere Vorformlinge sicher und ohne Beschädigung aus dem Spritzgußwerkzeug zu entfernen, kann die Steuerung des Übergabegreifers derart erfolgen, daß dieser zum Entfernen des Vorformlings aus der Patrize oder Matrize einen Abhebehub ausführt. Insbesondere in Verbindung mit einem Übergabegreifer mit Schwenkarm ist hierdurch sichergestellt, daß bei dem Entnahmevorgang keine Berührung des Vorformlings mit der Patrize oder Matrize vorkommt.

Es sei an dieser Stelle erwähnt, daß die vorliegende Erfindung unabhängig von der Anzahl der Formnester im Spritzgußwerkzeug und Blasformwerkzeug ausgeführt werden kann, solange sichergestellt ist, daß eine schnellstmögliche Übergabe des Vorformlings an das Blasformwerkzeug realisierbar ist. Als Übergabegreifer können die verschiedensten Greifertypen, wie z.B. auch Sauggreifer, verwendet werden.

Im folgenden werden Ausführungsbeispiele der vorliegenden Erfindung anhand einer Zeichnung näher erläutert. Es zeigt:
- Fig. 1: eine Ausführungsform einer nicht erfindungsgemäßen Spritzgußmaschine in schematischer Darstellung und geschlossenen Werkzeugen,
- Fig. 2: die Ausführungsform aus Fig. 1 mit geöffneten Werkzeugen,
- Fig. 3: eine Ausführungsform einer erfindungsgemäßen Spritzgußmaschine in schematischer Darstellung und geschlossenen Werkzeugen und
- Fig. 4: die Ausführungsform aus Fig. 3 mit geöffneten Werkzeugen.

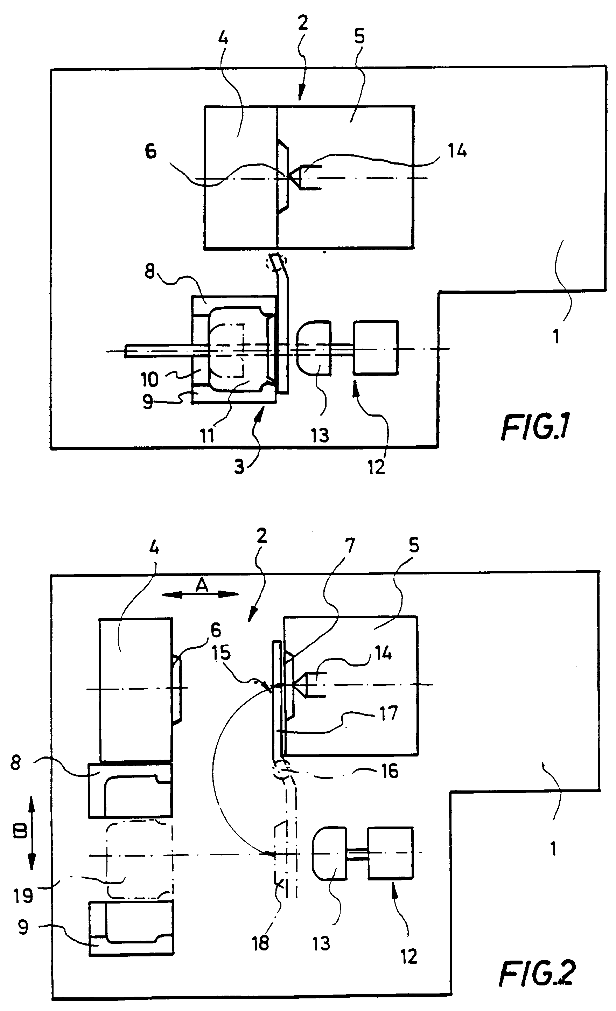

Bezugnehmend auf Fig. 1 und 2 wird im folgenden eine nicht erfindungsgemäße Ausführungsform näher erläutert. An dieser Stelle sei erwähnt, daß, obwohl es bevorzugt ist, daß die in den Figuren schematisch dargestellte Spritzgußmaschine in einer Draufsicht zu sehen ist, ergeben sich durch jegliche sinngemäße Anordnungen durch Drehen dieser Anordnung eventuell zusätzliche Vorteile.

Die in Fig. 1 und 2 dargestellte Spritzgußmaschine umfaßt ein Maschinenbett 1 mit darauf angeordnetem Spritzgußwerkzeug 2 und Blasformwerkzeug 3. Das Spritzgußwerkzeug 2 setzt sich aus einer Patrize 4 und einer Matrize 5 zusammen. Die Patrize 4 weist mindestens einen Formkern 6 auf, der mit entsprechendem Abstand zur Bildung einer Formkavität in die entsprechend zugeordnete Formmulde 7 der Matrize 5 eingreift.

Das in dieser Ausführungsform gezeigte Blasformwerkzeug 3 umfaßt eine linke und rechte Formhälfte 8, 9 und einen Bodenschließer 10. Jeder Blasform 11, die durch die beiden Formhälften 8, 9 und die Bodenschließe 10 gebildet ist, ist ein Vorrecker 12 mit einem aus- und einfahrbaren Recksstempel 13 zugeordnet.

Die Spritzgußmaschine umfaßt weiterhin eine nicht dargestellte Spritzgußeinheit, die lediglich schematisch durch ihr Anspritzmundstück 14 angedeutet ist und Kunststoff in die Formkavität einspritzen kann.

Zwischen dem Spritzgußwerkzeug 2 und dem Blasformwerkzeug 3 ist ein Übergabegreifer 15 mit einer ortsfest an der Matrize 5 angeordneten Schwenkachse 16 und einem um die Schwenkachse 16 schwenkbaren Schwenkarm 17 vorgesehen. Der Übergabegreifer 15 wird durch die Schließ- und Öffnungsbewegung des Spritzgußwerkzeugs 2 oder alternativ durch die Schließ- und Öffnungsbewegung des Blasformwerkzeugs 3 zwangsgesteuert. Die Öffnungsrichtung A des Spritzgußwerkzeugs 2 und die Öffnungsrichtung B des Blasformwerkzeugs 3 sind bei dieser Ausführungsform senkrecht zueinander angeordnet. Die Schließ- bzw. Öffnungsbewegungen des Spritzgußwerkzeugs 2 bzw. des Blasformwerkzeugs 3 können separat oder zwangsgesteuert zueinander erfolgen. Derselbe Sachverhalt trifft auch für die Bewegung und Ansteuerung des Vorreckers 12 zu.

Im folgenden wird die Wirkungs- und Funktionsweise der zuvor beschriebenen Ausführungsform näher erläutert.

Wenn sich die Spritzgußmaschine in dem in Fig. 1 gezeigten Zustand befindet wird Kunststoff in die Kavität des Spritzgußwerkzeuges 2 eingespritzt. Selbstverständlich können, obwohl in dieser Ausführungsform nur eine Formmulde 7 und ein Formkern 6 dargestellt sind mehrere Formkavitäten angeordnet sein. Gleichzeitig erfolgt im Blasformwerkzeug 3 die Blasformung des aus dem Spritzgußwerkzeug 2 vorher entnommenen Vorformlings 18. Dies geschieht durch Schließen des Blasformwerkzeugs 3, Einblasen von Druckluft und gleichzeitigem Vorrecken mittels des Reckstempels 13, der in das Werkstück während des Bearbeitungsvorganges einfährt. Der Greifer 15 ist bei dieser Ausführungsform derart angepaßt, daß er während des Blasvorganges im vorderen Bereich der Blasform 11 verbleibt und einen Bereich der Blasform bildet.

Wenn sowohl auf der einen Seite der Spritzgußvorgang und auf der anderen Seite der Blasformvorgang beendet sind, Öffnen die beiden Werkzeuge 2, 3. Aus der Blasform 11 wird das fertige Werkstück 19 entnommen und gleichzeitig schwenkt der Übergabegreifer 15 in den sich öffnenden Werkzeugbereich des Spritzgußwerkzeugs 2 ein entnimmt den Vorformling 18 und schwenkt spätestens bei Einsetzen der Schließbewegung wieder aus dem Werkzeugbereich heraus und überführt den Vorformling 18 zur sich wieder schließenden Blasform 11.

Es ist ersichtlich, daß aufgrund der relativ filigranen Ausgestaltung des Übergabegreifers 15 im Verhältnis zu den Werkzeugen 2, 3 ein sehr leichtgewichtiges Übergabeelement bereitgestellt wird, daß darüber hinaus mit sehr hohen Geschwindigkeiten aus den jeweiligen Werkzeugbereichen ein- und ausgefahren werden kann, da nur geringe Massen bewegt werden müssen. Hierdurch wird eine schnellstmögliche Übergabe des Vorformlings 18 an das Blasformwerkzeug 3 erreicht, wodurch die durch den Spritzgußvorgang vorhandene Restwärme am Vorformling 18 für den Blasformvorgang ausgenutzt werden kann, ohne daß die Notwendigkeit zusätzlicher Heizelemente besteht, wobei diese natürlich selbstverständlich auch gegebenenfalls in dem Greifer 15 integriert sein können.

Des weiteren kann die Zwangssteuerung des Übergabegreifers 15 derart erfolgen, daß dieser beim Entnehmen des Vorformlings 18 aus dem Spritzgußwerkzeug 2 erst einmal einen linearen im wesentlichen in Öffnungsrichtung A verlaufenden Abhebehub vor der eigentlichen Schwenkbewegung ausführt.

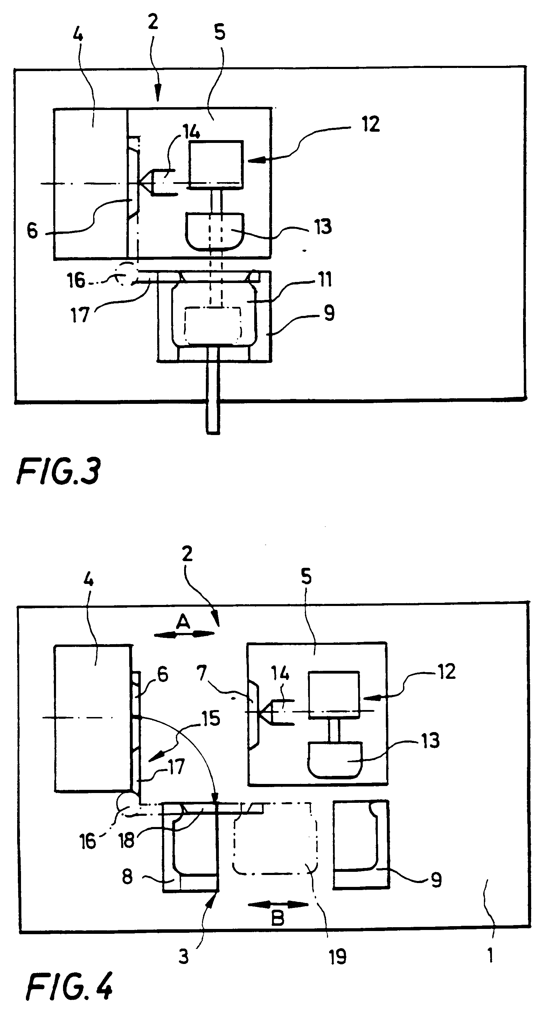

Im folgenden wird eine Ausführungsform der vorliegenden Erfindung anhand der Fig. 3 und 4 näher erläutert. Zur Vermeidung von Wiederholungen wird im wesentlichen nur auf die entscheidenden Unterschiede eingegangen. Für gleiche und ähnliche Bauelemente werden hier die gleichen Bezugsziffern verwendet.

Im wesentlichen unterscheidet sich diese Ausführungsform von der ersten dadurch, daß die Öffnungsrichtung A des Spritzgußwerkzeugs 2 und die Öffnungsrichtung B des Blasformwerkzeugs 3 parallel zueinander erfolgen. Der Übergabegreifer 18 muß aus diesem Grunde nur noch eine Schwenkbewegung von 90° ausführen, um den Vorformling 18 aus dem Spritzgußwerkzeug 2 zu entfernen und an das Blasformwerkzeug 3 abzugeben. Der Vorrecker 12 kann hierzu im hinteren Bereich der Matrize 5 integriert sein, so daß er im zurückgezogenen Zustand im wesentlichen nicht über die Seitenfläche des Spritzgußwerkzeugs 2 hervorsteht. Dadurch ist die Möglichkeit gegeben, daß das Blasformwerkzeug 3 so nahe wie möglich an das Spritzgußwerkzeug 2 angeordnet werden kann. Der große Vorteil dieser Ausführungsform besteht darin, daß, z.B. wenn angenommen wird, daß die Patrize 4 und die linke Formhälfte 8 stationär angeordnet sind und sich die Matrize 5 und die rechte Formhälfte 9 relativ zu den ersteren bewegen, die rechte Formhälfte 9 und die Matrize 5 fest miteinander verfahrbar verbunden sind. Hierdurch wird lediglich nur ein einziger Antrieb für entweder die Matrize 5 oder die rechte Formhälfte 9 benötigt, um die Schließ- und Öffnungsbewegung für beide Werkzeuge 2, 3 zu realisieren.

Die in den Fig. 3 und 4 gezeigte erfindungsgemäße Ausführungsform eignet sich auch insbesondere zur Entnahme der Werkstücke 19 von unten, das bedeutet, daß die Fig. 3 und 4 als Seitenansichten anzusehen sind. Bei dieser Anordnung weist das Werkstück 19 wieder eine geeignete zum Weitertransport günstige Position auf, die eine Reduktion der Handhabungsschritte möglich macht.

Ergänzend sei erwähnt, daß sich die oben beschriebene Ausführungsformen insbesondere auch für Hohlbodenbecher, Kelchbecher und Rechteckbecher, wie auch zur Verarbeitung der unterschiedlichsten Materialien sehr gut eignen.

## Patentansprüche

1. Spritzgußmaschine mit einem mindestens eine Matrize (5) und Patrize (4) umfassenden Spritzgußwerkzeug (2), wobei in unmittelbarer Nähe neben dem Spritzgußwerkzeug (2) ein Blasformwerkzeug (3) angeordnet ist und daß zwischen dem Spritzgußwerkzeug (2) und dem Blasformwerkzeug (3) ein Übergabeelement (15) zum Übergeben eines Vorformlings (18) von dem Spritzgußwerkzeug (2) an das Blasformwerkzeug (3) angeordnet ist, wobei das Übergabeelement (15) zu den Öffnungs- bzw. Schließbewegungen des Spritzgußwerkzeugs (2) und des Blasformwerkzeugs (3) in seiner Bewegung synchronisiert ist und die Öffnungsrichtungen (A,B) des Spritzgußwerkzeugs (2) und des Blasformwerkzeugs (3) parallel zueinander ausgerichtet sind, **dadurch gekennzeichnet**, daß zumindest die sich bewegenden Teile des Spritzgußwerkzeugs (2) und des Blasformwerkzeugs (3) zum Ausführen einer gemeinsamen Öffnungs- und Schließbewegung miteinander fest verbunden sind, wobei der Übergabegreifer (15) in den Werkzeugbereich des geöffneten Spritzgußwerkzeugs (2) einfährt, den jeweiligen Vorformlingen von der Patrize (4) oder Matrize (5) entfernt, aus dem Werkzeugbereich ausfährt und den Vorformling (18) in das entsprechend geöffnete Blasformwerkzeug (3) einfährt.

2. Spritzgußmaschine nach Anspruch 1, **dadurch gekennzeichnet**, daß dem Blasformweruzeug (3) mindestens ein Reckstempel (13) zugeordnet ist.

3. Spritzgußmaschine nach Anspruch 1 oder 2, **dadurch gekennzeichnet**, daß die Bewegung des Übergabegreifers (15) durch die Öffnungs- bzw. Schließbewegung des Spritzgußwerkzeugs (2) und/oder Blasformwerkzeugs (3) zwangsgesteuert ist.

4. Spritzgußmaschine nach einem der Ansprüche 1 bis 3, **dadurch gekennzeichnet**, daß der Übergabegreifer (15) einen Schwenkarm (17) aufweist, der um eine bezüglich einer Werkzeughälfte des spritzguß- und/oder Blasformwerkzeugs (2,3) ortsfest angeordnete Schwenkachse (16) schwenkbar ist.

5. Spritzgußmaschine nach einem der Ansprüche 1 bis 4, **dadurch gekennzeichnet**, daß der Übergabegreifer (15) als Formbestandteil der Matrize (5) oder Patrize (4) ausgebildet ist, und beim Spritzvorgang in dem Spritzgußwerkzeug (2) verweilt und einen Teil der Form bildet.

6. Spritzgußmaschine nach einem der Ansprüche 1 bis 4, **dadurch gekennzeichnet**, daß der Übergabegreifer (15) als Formbestandteil der Blasform (11) ausgebildet ist und beim Blasvorgang in dem Blasformwerkzeug (3) verweilt und einen Teil der Blasform (11) bildet.

7. Spritzgußmaschine nach einem der Ansprüche 1 bis 6, **dadurch gekennzeichnet**, daß die Steuerung des Übergabegreifers (15) derart erfolgt, daß dieser zum Entfernen des Vorformlings (18) aus der Patrize (4) oder Matrize (5) einen Abhebehub ausführt.

## Claims

1. An injection moulding machine including an injection moulding tool (2) which comprises at least one female die (5) and one male die (4), a blow moulding tool (3) being arranged in closely spaced relationship with said injection moulding tool (2), and a transfer member (15) being arranged between said injection moulding tool (2) and said blow moulding tool (3), said transfer member (15) being used for transferring a preform (18) from said injection moulding tool (2) to said blow moulding tool (3) and the movement of said transfer member (15) being synchronized with the opening and closing movements of said injection moulding tool (2) and of said blow moulding tool (3), the opening directions (A, B) of the injection moulding tool (2) and of the blow moulding tool (3) being oriented parallel to one another, **characterized in that** at least the moving parts of the injection moulding tool (2) and of the blow moulding tool (3) are fixedly interconnected for carrying out a common closing and opening movement, said transfer member (15) moving into the tool area of the open injection moulding tool (2), removing the respective preform from the male die (4) or from the female die (5), moving out of said tool area and introducing the preform (18) into the blow moulding tool (3) that is open to an adequate extent.

2. An injection moulding machine according to claim 1, **characterized in that** the blow moulding tool (3) has associated therewith at least one stretching rod (13).

3. An injection moulding machine according to claim 1 or 2, **characterized in that** the movement of the transfer member (15) is positively coupled to the opening and closing movements of the injection moulding tool (2) and/or of the blow moulding tool (3).

4. An injection moulding machine according to one of the claims 1 to 3, **characterized in that** the transfer member (15) is provided with a pivot arm (17) which is adapted to be pivoted about a pivot axis (16) that is arranged in a stationary manner with regard to one tool half of the injection moulding tool (2) and/or blow moulding tool (3).

5. An injection moulding machine according to one of the claims 1 to 4, **characterized in that** the transfer member (15) is implemented as a constituent part of the female die (5) or of the male die (4) and that, during the injection process, said transfer member dwells in the injection moulding tool (2) and forms part of the mould.

6. An injection moulding machine according to one of the claims 1 to 4, **characterized in that** the transfer member (15) is implemented as a constituent part of the blowing mould (11) and that, during the blowing process, said transfer member dwells in the blow moulding tool (3) and forms part of said blowing mould (11).

7. An injection moulding machine according to one of the claims 1 to 6, **characterized in that** the transfer member (15) is controlled in such a way that it carries out a lift-off movement for removing the preform (18) from the male die (4) or from the female die (5).

## Revendications

1. Machine de moulage par injection avec un outil de moulage par injection (2) comprenant au moins une matrice (5) et un poinçon (4), un outil de soufflage (3) étant disposé à proximité immédiate de l'outil de moulage par injection (2) et un élément de transfert (15) pour le transfert d'une préforme (18) de l'outil de moulage par injection (2) à l'outil de soufflage (3) étant disposé entre l'outil de moulage par injection (2) et l'outil de soufflage (3), dans laquelle l'élément de transfert (15) est synchronisé dans son déplacement aux mouvements de fermeture et d'ouverture de l'outil de moulage par injection (2) et de l'outil de soufflage (3), les sens d'ouverture (A, B) de l'outil de moulage par injection (2) et de l'outil de soufflage (3) étant orientés parallèlement l'un à l'autre, caractérisée en ce qu'au moins les pièces mobiles de l'outil de moulage par injection (2) et de l'outil de soufflage (3) sont reliées entre elles de façon fixe pour effectuer un mouvement commun d'ouverture et de fermeture, le grappin de transfert (15) pénétrant dans l'emprise de l'outil de moulage par injection (2) ouvert pour enlever les préformes concernées du poinçon (4) ou de la matrice (5) en ressortant de l'emprise d'outil transférant la préforme (18) vers l'outil de soufflage (3) ouvert.

2. Machine de moulage par injection selon la revendication 1, caractérisée en ce qu'à l'outil de soufflage (3) est attribué au moins un poinçon d'étirage (13).

3. Machine de moulage par injection selon la revendication 1 ou 2, caractérisée en ce que le mouvement du grappin de transfert (15) est commandé de façon asservie par le mouvement d'ouverture ou de fermeture de l'outil de moulage par injection (2) et/ou de l'outil de soufflage (3).

4. Machine de moulage par injection selon l'une des revendications 1 à 3, caractérisée en ce que le grappin de transfert (15) présente un bras pivotant (17) qui est mobile autour d'un pivot (16) fixe par rapport à une moitié de l'outil de moulage par injection et/ou de soufflage (2, 3).

5. Machine de moulage par injection selon l'une des revendications 1 à 4, caractérisée en ce que le grappin de transfert (15) est conçu en tant qu'élément du moule de la matrice (5) ou du poinçon (4) et séjourne dans l'outil de moulage par injection (2) lors de l'opération d'injection et constitue aussi une partie du moule.

6. Machine de moulage par injection selon l'une des revendications 1 à 4, caractérisée en ce que le grappin de transfert (15) est conçu en tant qu'élément du moule de soufflage (11) et séjourne dans l'outil de soufflage (3) lors de l'opération de soufflage et constitue aussi une partie du moule de soufflage (11).

7. Machine de moulage par injection selon l'une des revendications 1 à 6, caractérisée en ce que la commande du grappin de transfert (15) se fait de telle sorte que celui-ci effectue une course de levage pour l'enlèvement de la préforme (18) hors du poinçon (4) ou de la matrice (5).
